Europäisches Patentamt

European Patent Office

Office européen des brevets

(19)

(11) Numéro de publication: **0 296 909**
**A1**

(12) # DEMANDE DE BREVET EUROPEEN

(21) Numéro de dépôt: 88401348.3

(22) Date de dépôt: 03.06.88

(51) Int. Cl.⁴: **B 60 R 1/06**

(30) Priorité: 05.06.87 FR 8707951

(43) Date de publication de la demande:
28.12.88 Bulletin 88/52

(84) Etats contractants désignés:
DE ES GB IT NL SE

(71) Demandeur: **Manzoni-Bouchot Société anonyme dite:**
**Zone Industrielle "Le Plan d'Acier" Boîte Postale No 9**
**F-39200 Saint-Claude (FR)**

(72) Inventeur: **Manzoni, Bernard, Antoine, Jean**
**Lot. "Les Genevriers" Avignon-Les-St-Claude**
**F-39200-Saint-Claude (FR)**

(74) Mandataire: **Caunet, Jean et al**
**Cabinet BEAU DE LOMENIE 55, rue d'Amsterdam**
**F-75008 Paris (FR)**

(54) **Dispositif pour la transmission sans vibrations des mouvements d'une commande électrique à une platine porte-miroir d'un rétroviseur.**

(57) La platine porte-miroir est supportée par le couvercle (2) du boîtier par l'intermédiaire d'un croisillon de pivotement et reliée aux deux moteurs par deux transmissions, chaque transmission comportant une vis (10) accouplée à un moteur et engrenant avec une roue tangente (12) faisant corps un écrou (14) coopérant avec une vis (16) munie d'une rotule (18) de liaison avec la platine.

Selon l'invention, chaque écrou (14) coopère avec une rondelle-mors (30) repoussée par une rondelle-ressort (33) pour pincer une coupelle sphérique (24) du fond (23) du boîtier, les sièges (26, 28) de la coupelle étant concentriques à un point (25) de pivotement situé entre le fond (23) et le couvercle (2).

Fig. 3

EP 0 296 909 A1

**Description**

**Dispositif pour la transmission sans vibrations des mouvements d'une commande électrique à une platine porte-miroir d'un rétroviseur.**

La présente invention concerne un dispositif pour la transmission sans vibrations des mouvements ciel-terre et gauche-droite d'une commande électrique à une platine porte-miroir d'un rétroviseur, notamment de véhicule automobile.

Un rétroviseur de ce type est illustré par le brevet français 2.526.737 et décrit ci-après pour la partie reproduite dans l'invention par les figures 1 à 3 du dessin annexé.

Ce rétroviseur connu comporte un boîtier en matière plastique constitué par un corps 1 et un couvercle 2. Il comporte également une platine 3 sur laquelle est fixé un miroir. Un croisillon présente deux axes de pivotement perpendiculaires 4 et 5 clipsés dans des chapes 6 de la platine et 7 du couvercle respectivement.

Le corps 1 du boîtier contient deux moteurs électriques 8 et 9 accouplés à des vis tangentes 10 et 11 engrenant avec des roues tangentes 12 et 13 faisant corps avec des écrous 14 et 15 qui coopèrent avec des vis 16 et 17.

La vis 16 est munie d'une rotule 18 clipsée dans un palier 19 de la platine 3 et de même la vis 17 est munie d'une rotule non représentée sur le dessin et clipsée dans un autre palier également non représenté de la platine. Les axes géométriques moyens 20 et 21 des vis 16 et 17 sont sensiblement perpendiculaires à ladite platine et disposés à 90 degrés par rapport au centre 22 du croisillon 4, 5.

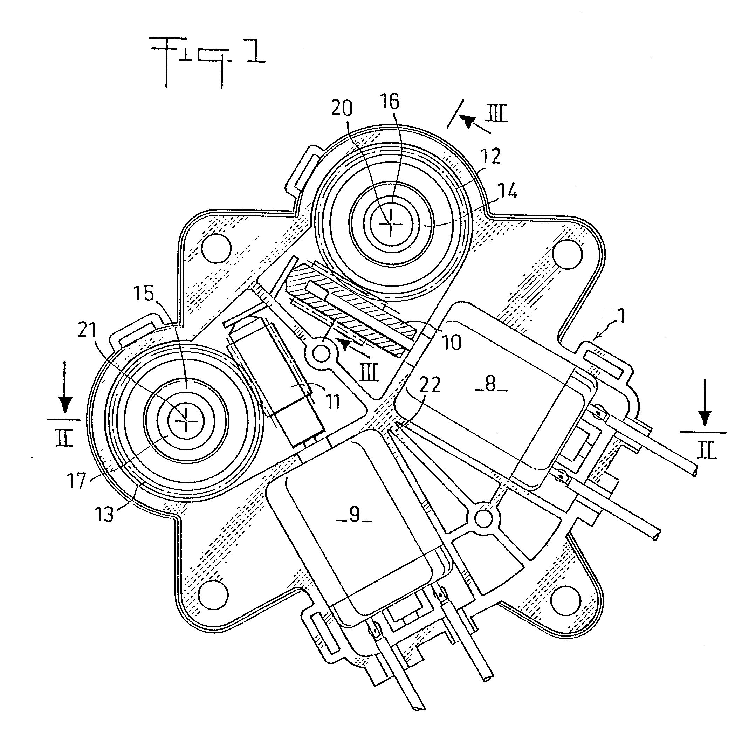

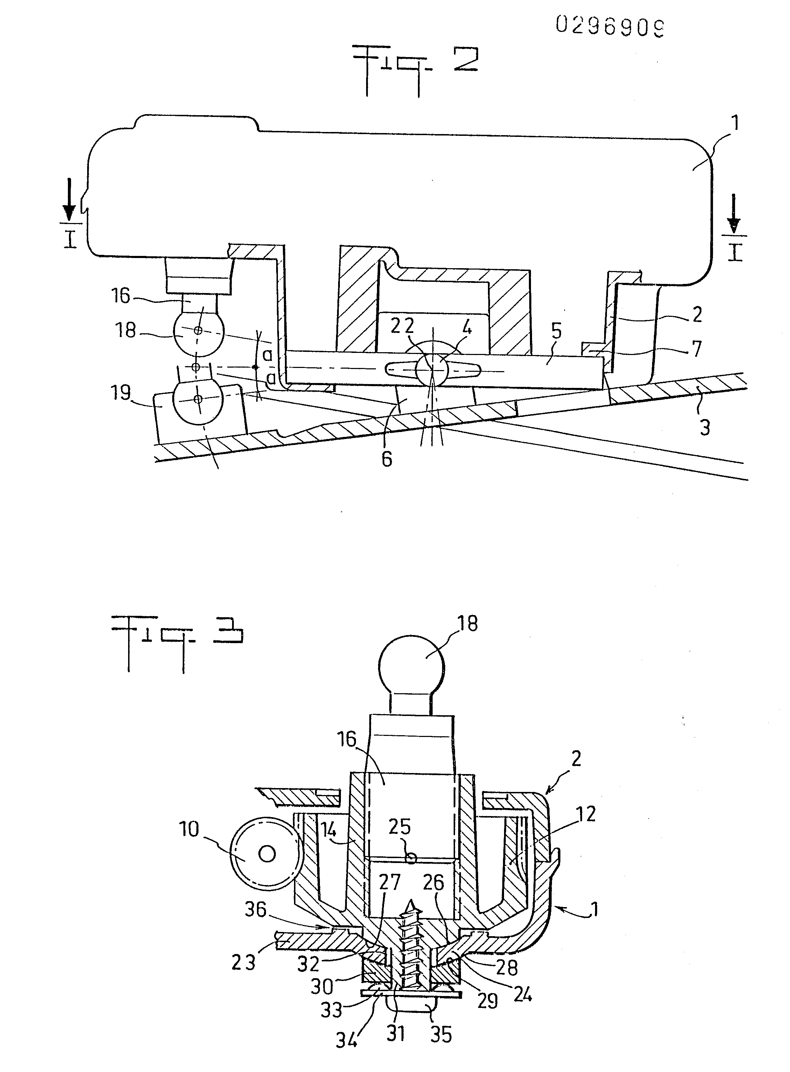

Dans ce brevet français 2.526.737, chacun des écrous 14 et 15 est fixé contre le fond 23 du corps de boîtier par un moyen non représenté sur les figures 1 à 3 précitées. Ce moyen est une vis bloquée dans le trou taraudé d'un bossage central de l'écrou considéré, vis dont la tête applique une rondelle contre la face extérieure de ce fond et qui presse cet écrou contre la face intérieure dudit fond.

Ce type de montage ne permet pas d'aligner en permanence l'axe de chaque pignon avec l'axe de la rotule de commande 18 correspondante. Il en résulte une résistance mécanique importante et la nécessité de prévoir un jeu axial qui, même très faible , engendre des vibrations du miroir et donne des images, tremblées.

Dans la demande d'addition 2.545.768, rattachée à ce brevet français 2.526.737, un autre type de liaison est proposé pour tenter de remédier à l'inconvénient précité. Chacun des écrous 14 et 15 est muni d'une rotule clipsée dans un palier venu de moulage dans le fond 23 du corps de boîtier. Son centre de rotation est situé très près de ce fond et vers l'extérieur. En outre, son siège défini par le clip se trouve disposé entre la rotule et le couvercle, une butée étant opposée à ce siège afin que ladite rotule soit prisonnière.

Un premier inconvénient de ce dispositif de transmission connu réside dans le fait que, lors du pivotement du miroir, suivant un angle maximal "a" dans un sens ou dans l'autre, chacun des axes géométriques 20 et 21 des écrous 14 et 15 pivote suivant une amplitude angulaire telle que leurs rotules extrêmes frottent contre les parois de leurs logements et les usent. En raison de cette usure qui apparaît relativement vite du fait que les pièces sont en matière plastique et petites, le miroir vibre, comme dans la réalisation antérieure, lorsque le véhicule circule et l'image qu'il réfléchit tremble. Il en résulte que la vision de l'environnement pour le conducteur est perturbée et difficilement compatible avec une conduite vigilante et sûre.

Un deuxième inconvénient est que la manoeuvre du miroir n'est pas aussi douce qu'il serait souhaitable, ceci au détriment de la précision et de la fidélité des réglages.

Un troisième inconvénient est que le boîtier étant en matière plastique moulée, et de dimensions relativement petites, la réalisation des logements pour les rotules pose des difficultés sérieuses qui conduisent à ce que le guidage et le maintien des rotules ne peut pas être parfait.

Dans cette réalistion connue selon la demande d'addition française 2 545.768, chaque écrou fait corps avec la roue tangente correspondante, de sorte que la transmission de la rotation de l'un à l'autre s'effectue de façon homocinétique, c'est-à-dire avec une très grande précision, et sans jeu,c'est-à-dire sans risque de vibrations à ce niveau.

Un autre rétroviseur connu de même type est décrit dans le brevet européen 112 140. Dans ce rétroviseur, le pignon coopérant avec une vis menante est distinct de l'écrou coopérant avec une vis menée. Cette disposition permet de placer le centre de pivotement de l'écrou à l'intérieur du pignon pour que l'axe dudit écrou soit toujours aligné avec l'axe de la rotule d'actionnement du miroir, lorsque le moteur entraînant le couple vis menante-pignon est commandé. En effet, l'écrou forme une sphère guidée en pivotement autour de son centre dans une douille sphérique du pignon, la sphère étant maintenue en place par clipsage au moyen d'une lèvre déformable de retenue de la douille.

Pour l'accouplement pivotant de l'écrou avec le pignon, les moyens mis en oeuvre sont constitués par deux cannelures ou nervures longitudinales diamétralement opposées et faisant saillie dans la douille sphérique et par deux rainures ménagées dans la sphère, ces rainures étant divergentes à leurs deux extrémités pour permettre à la fois la transmission de la rotation du pignon à l'écrou et la liberté de pivotement de la sphère de cet écrou autour de son centre.

Enfin, une rondelle ondulée est interposée entre le pignon et le boîtier pour former une butée élastique.

Ce brevet européen 112.140 apporte donc un enseignement selon lequel le centre de pivotement de l'écrou peut être rapproché de la rotule d'actionnement du miroir, ce qui pourrait permettre de remédier aux inconvénients précités du rétroviseur selon la demande d'addition française 2.245.768.

Toutefois, cet enseignement ne peut pas être retenu dans le cadre de cette addition car il nécessite, selon ledit brevet européen, que l'écrou soit distinct du pignon, alors que dans ladite addition, ceux-ci font corps l'un avec l'autre. Or, la séparation de l'écrou et du pignon conduit à des inconvénients sérieux. L'accouplement pivotant de la sphère avec le pignon engendre, d'une part, une transmission de rotation non homocinétique nuisant à la fidélité et à la précision du réglage, d'autre part, des jeux favorables aux vibrations du miroir. Le clipsage de la rotule dans le pignon n'assure pas un maintien parfait de ladite rotule, de sorte que de l'usure et du jeu peuvent apparaître. Enfin, la rondelle ondulée s'oppose, étant donné qu'elle sert d'appui au pignon et qu'elle est déformable, à un positionnement parfait dudit pignon.

La présente invention a pour but de remédier aux inconvénients de ces deux rétroviseurs connus et propose à cet effet un dispositif perfectionné dans lequel le centre de rotation de l'écrou de chaque transmission est éloigné du fond du boîtier vers le couvercle et déterminé par deux sièges sphériques concentriques à flèches réduites, formés par le fond, le siège concave étant situé à l'intérieur du boîtier et coopérant avec une portée complémentaire de l'écrou tandis que le siège convexe est situé à l'extérieur et coopère avec une portée complémentaire d'une rondelle-mors, laquelle est enfilée sur une tige dudit écrou traversant le fond et est pressée par un organe élastique prenant appui sur une saillie extrême de la tige.

L'organe élastique précité peut être une rondelle semi-torique.

Du jeu est ménagé entre le fond du boîtier et l'écrou, autour de la portée sphérique de celui-ci.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin :
- la figure 1 est une vue en plan prise suivant la ligne I-I de la figure 2, montrant de dessus le corps équipé du boîtier de commande électrique d'un rétroviseur,
- la figure 2 est une vue schématique prise, à plus grande échelle, partie en coupe, partie en élévation suivant la ligne II-II de la figure 1,
- la figure 3 est une coupe partielle prise suivant la ligne III-III de la figure 1 illustrant le dispositif antivibratoire conforme à l'invention.

Le rétroviseur faisant l'objet du perfectionnement est celui décrit dans ce qui précède.

Ce perfectionnement est décrit ci-après en se référant à la figure 3 pour le montage de l'écrou 14 et il s'applique également au montage de l'écrou 15.

Le fond 23 du corps 1 présente une coupelle sphérique 24 facilement moulable, de faible flèche et de surface relativement grande. La coupelle 24 est délimitée par deux surfaces concentrique centrées sur un point 25 situé entre le fond 23 et le couvercle 2. La surface sphérique intérieure concave 26 constitue un siège pour une portée extrême 27 de forme complémentaire définie par l'écrou 14. La surface sphérique extérieure convexe 28 constitue un siège pour une portée 29 de forme complémentaire définie par une rondelle-mors 30.

Cette rondelle-mors 30 est enfilée sur une tige 31 prolongeant l'écrou 14 et traversant un trou 32 de plus grand diamètre ménagé dans la coupelle 24. La tige 3 constitue un guide en translation pour la rondelle-mors 30. Un organe élastique constitué dans l'exemple représenté par une rondelle semi-torique 33 dénommée rondelle Nomel est interposé entre la rondelle-mors 30 et une rondelle large 34 appliquée contre l'extrémité de la tige 31 par une vis 35 bloquée dans ladite tige.

L'écrou 14 constitue donc avec la rondelle-mors 30 un ensemble presseur emprisonnant la coupelle 24, ensemble qui peut pivoter autour du centre 25, mais avec une pression de contact sur le fond 23 du corps 1 de boîtier limitée et déterminée par le tarage de la rondelle-ressort 33. Cette dernière permet également de rattraper automatiquement le jeu d'usure au fur et à mesure qu'il apparaît.

Enfin, un jeu de fonctionnement 36 est ménagé entre le fond 23 du corps 1 de boîtier et l'écrou 14 autour de la coupelle 24, ce jeu permettant audit écrou de pivoter.

**Revendications**

1.- Dispositif pour la transmission sans vibrations de chacun des mouvements ciel-terre et gauche-droite d'une commande électrique à une platine porte-miroir de rétroviseur, cette platine (3) étant supportée, par l'intermédiaire d'un organe de pivotement, tel qu'un croisillon à axes de pivotement perpendiculaires (4, 5), par le couvercle (2) d'un boîtier dont le corps (1) contient les moteurs de commande (8, 9) et ladite platine (3) étant reliée à ces moteurs au moyen de deux transmissions pour les deux pivotements, chaque transmission comportant une vis (10 ; 11) accouplée à un moteur (8 ; 9) et engrenant avec une roue tangente (12 ; 13) faisant corps avec un écrou (14 ; 15) coopérant avec une vis (16 ; 17) qui est munie d'une rotule (18) clipsée dans la platine (3), tandis que l'écrou est relié au corps du boîtier par un organe de rotation, caractérisé en ce que le centre de rotation (25) de l'écrou (14) de chaque transmission est éloigné du fond (23) du boîtier (1) vers le couvercle (2) et déterminé par deux sièges sphériques (26, 28) concentriques à flèches réduites, formés par le fond, le siège concave (26) étant situé à l'intérieur du boîtier (1) et coopérant avec une portée complémentaire (27) de l'écrou (14), tandis que le siège convexe (28) est situé à l'extérieur et coopère avec une portée complémentaire (29) d'une rondelle-mors (30), laquelle est enfilée sur une tige (31) dudit écrou traversant le fond (23) et est pressée par un organe élastique (33) prenant appui sur une saillie extrême (34) de la tige.

2.- Dispositif selon la revendication 1, caractérisé en ce que l'organe élastique précité est une rondelle semi-torique (33).

3.- Dispositif selon la revendication 2, caractérisé en ce que la rondelle élastique semi-torique (33) prend appui, par l'intermédiaire éventuellement d'une rondelle large (34), sur la tête d'une vis (35) montée dans la tige (31) de l'écrou (14).

4.- Dispositif selon la revendication 1, caractérisé en ce que du jeu (36) est ménagé entre le fond (23) du boîtier et l'écrou (14), autour de la portée sphérique (27) de celui-ci.

Fig. 1

**Fig. 2**

**Fig. 3**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | FR-A-2 545 768  (MANZONI)<br>* Revendications 1,2; figures 1,2 *<br>--- | 1 | B 60 R    1/06 |
| Y | EP-A-0 112 140  (FISHER)<br>* Page 6, ligne 9 - page 7, ligne 13; figures 1-4 *<br>--- | 1 | |
| A | US-A-4 506 954  (ENOMOTO)<br>* Colonne 3, lignes 18-66; figure 4 *<br>----- | 1 | |

DOMAINES TECHNIQUES
RECHERCHES (Int. Cl.4)

B 60 R

Le présent rapport a été établi pour toutes les revendications

| Lieu de la recherche | Date d'achèvement de la recherche | Examinateur |
|---|---|---|
| LA HAYE | 16-09-1988 | MAUSSER, T. |